# EUROPÄISCHE PATENTANMELDUNG

(11) **EP 2 570 697 A2**
(43) Veröffentlichungstag der Anmeldung: **20.03.2013**
(21) Anmeldenummer: 12184344.5
(22) Anmeldetag: 13.09.2012
(51) Int. Cl.: F16F 7/104

(54) **Schwingungstilgungseinrichtung für eine große elektrische Maschine**

(30) Priorität: 16.09.2011 DE 102011053730
(71) Anmelder: VEM Sachsenwerk GmbH, 01257 Dresden (DE)
(72) Erfinder: Gündel, Andreas, 01309 Dresden (DE); Philipps, Frank, 01731 Kreischa (DE); Koehler, Ulrich, 01279 Dresden (DE); Buschmann, Nicole, 01309 Dresden (DE); Kramer, Tobias, 01277 Dresden (DE); Schönfelder, Jens, 02748 Bernstadt OT Dittersbach a.d.E (DE)
(74) Vertreter: Drechsler, Gottfried

(57) **Zusammenfassung**

Die Erfindung betrifft eine Schwingungstilgungseinrichtung für eine große elektrische Maschine für unterschiedliche Einsatzorte.

Aufgabe ist es eine neuartige Schwingungstilgungseinrichtung zu schaffen, welche sich beliebig an unterschiedlich große Maschinentypen anpassen lässt, problemlos auf verschiedene Frequenzen abgestimmt werden kann, konstruktiv einfach und universell aufgebaut ist.

Erfindungsgemäß sind ein, zwei oder mehrere, d. h. eine beliebige Anzahl von translatorischen Schwingunstilgern 7 an möglichst steifen, nicht drehenden Teilen der elektrischen Maschine 1 angeordnet. Die translatorischen Schwingunstilger 7 haben eine Vorzugsarbeitsrichtung und bestehen aus einer schwingenden Masse 12, welche elastisch zwischen zwei Federn oder Federsystemen 11 mit Spiel auf zur Führung dienenden Bolzen 10 gelagert ist. Die Ausrichtung der zur Masseführung dienenden Bolzen 10 entspricht der jeweiligen Arbeitsrichtung des bzw. der Schwingungstilger 7. Die Bolzen 10 übertragen die durch das Feder-Masse-System 8 erzeugten Kräfte auf eine Grundplatte 9, die fest mit dem Maschinengehäuse 2 der elektrischen Maschine 1 verbunden ist. Mittels Gewindemuttern 13 wird sowohl die axiale Position der Masse 12 auf den Bolzen 6 zur Führung, sowie die Vorspannung der Federn oder des Federsystems 11 festgelegt. Die Masse 12 wird mittels einer pendelnden Aufhängung, z. B. mittels Ketten 15 in vertikaler Richtung an einen Aufhängevorrichtung 14 gehalten, wobei die Aufhängung eine Bewegung der Masse 12 in Arbeitsrichtung ermöglicht. Die Abstimmung des Feder-Masse-Systems 8 muss so ausgeführt sein, dass sich im Arbeitspunkt eine Phasenverschiebung zwischen 60° und 120° zwischen Masse 12 und Grundplatte 9 einstellt. Dies ist üblicherweise der Fall, wenn die Eigenfrequenz des Schwingungstilgers 7 als Einmassensystem betrachtet mit der anliegenden Erregerfrequenz zusammen fällt.

## Beschreibung

Die Erfindung betrifft eine Schwingungstilgungseinrichtung für eine große elektrische Maschine für unterschiedliche Einsatzorte.

Beim Betrieb großer rotierender elektrischer Maschinen können Schwingungen mit erheblichen Amplituden auftreten. Solche Schwingungen führen zu hohen mechanischen Belastungen oder Geräuschen und werden zum Einem durch die elektrische Maschine selbst produziert, oder aber von außen über mechanische, akustische oder magnetische Ankoppelungen eingetragen. Externe Ursachen finden sich beispielsweise im Betrieb von Walzstraßen durch die mechanischen Stoßbelastungen beim Anschnitt des Walzgutes. Fallen Frequenzen innerer oder äußerer Erregerquellen mit Systemeigenfrequenzen der elektrischen Maschine zusammen, führen die daraus resultierenden Schwingungen im längerfristigen Betrieb oft zum Versagen von verschiedenen Bauteilen. Bei komplexen Anlagen, wie beispielsweise dem Zusammenspiel eines großen elektrischen Motors, eines Fundaments, eines Getriebes sowie einer Arbeitsmaschine lassen sich im Vorfeld Eigenfrequenzen zum Teil sehr schwer oder nur ungenau ermitteln. So können zu nachgiebig gestaltete Fundamente im nachhinein beispielsweise die kritische Drehzahl eines Elektromotors oder Generators derart absenken, dass die Maschine dauerhaft in der Biegeresonanz der Welle betrieben wird. Treten trotz vorheriger Berechnungen ungünstige Resonanzen auf, lassen sich diese oft nur schwer oder gar nicht korrigieren. Die Folgen reichen im besten Fall von Anlagenabschaltungen durch Grenzwertüberschreitungen, über Lagerausfälle bis hin zum Totalversagen oder Brüchen im Gesamtsystem. In der Regel versucht man dann mit gezielten konstruktiven Maßnahmen die Schwingungen durch verschiedene aufwändige zusätzliche Sekundärmaßnahmen zu reduzieren. Dabei kommen Versteifungen, Verstärkungen, Verrippungen, Aufdickungen, Verjüngungen, elastische Aufstellungen, Zusatzmassen oder gegebenenfalls auch der Einsatz alternativer Materialien zur Anwendung. In der Regel sind derartige Maßnahmen nur unter hohem Aufwand zielführend.

Aus der DE 101 50 031 A1 ist eine technische Lösung bekannt, bei der bei einem kleinen einphasigen elektrischen Antriebsmotor Einrichtungen (sogenannte Schwingungsminderer) zur Minderung der Schwingungs- und Schallerzeugung angeordnet sind. Diese Schwingungsminderer sind am Rotor oder am Motorgehäuse befestigt. Sie bestehen aus elastisch an Federn aufgehängten ringförmigen Zusatzmassen, deren Eigenfrequenz entsprechend abgestimmt ist. Diese Schwingungsminderer sollen die Auswirkungen des pulsierenden Antriebsmomentes und des daraus resultierenden Reaktionsmomentes von einphasigen elektrischen Motoren, insbesondere von einphasigen elektronisch kommutierten Synchronmotoren für den Einsatz in Spülmaschinen verhindern. Dabei sind die ringförmigen Zusatzmassen direkt im inneren des Synchronmotors an mehreren ringförmig verteilten einzelnen Federelementen aufgehangen und befestigt. Diese Zusatzmassen besitzen im Vergleich zur Gesamtmasse des Synchronmotors prozentual betrachtet ein hohes Gewicht. Durch diese Anordnung werden allerdings nur Drehmomentschwingungen ausgeglichen. Diese Lösung ist nur für sehr kleine rotierende elektrische Synchronmotoren geeignet.

Im Zusammenhang mit elektrischen Maschinen kommen Schwingungstilger bisher lediglich an drehenden Läufern von Elektromotoren oder Elektrogeneratoren zur Minimierung von Schwingungen zum Einsatz. Derartige Schwingungstilger sind bei Elektromotoren mit konstanter Drehzahl typischerweise auf die doppelte Speisefrequenz abgestimmt, um auftretende Drehschwingungen durch Momentenpendelungen am Läufer zu minimieren.

Der Erfindung liegt die Aufgabe zu Grunde eine neuartige Schwingungstilgungseinrichtung für eine große elektrische Maschine mit konstanten Erregerfrequenzen für unterschiedlichste Einsatzorte mittels schwingungsreduzierender Elemente zu schaffen, welche sich beliebig an unterschiedlich große Maschinentypen anpassen lässt, problemlos auf verschiedene Frequenzen abgestimmt werden kann, konstruktiv einfach und universell aufgebaut ist, schnell und genau justiert werden kann, sowie für besondere Laufruhe bei konstanten Erregerfrequenzen sorgt und bei Bedarf nachträglich montierbar sein soll.

Die Aufgabe wird erfindungsgemäß mit den Merkmalen des Oberbegriffs und des kennzeichnenden Teils des ersten Patentanspruches gelöst. Weitere vorteilhafte Ausgestaltungen sind in den Unteransprüchen beschrieben.

Die erfindungsgemäße Schwingungstilgungseinrichtung für eine große elektrische Maschine 1 ist für unterschiedliche Einsatzorte geeignet. Erfindungsgemäß sind ein, zwei oder mehrere, d. h. eine beliebige Anzahl von translatorischen Schwingunstilgern 7 an möglichst steifen, nicht drehenden Teilen der elektrischen Maschine 1 angeordnet. Die translatorischen Schwingunstilger 7 haben eine Vorzugsarbeitsrichtung und bestehen aus einer schwingenden Masse 12, welche elastisch zwischen zwei Federn oder Federsystemen 11 mit Spiel auf zur Führung dienenden Bolzen 10 gelagert ist. Die Ausrichtung der zur Masseführung dienenden Bolzen 10 entspricht der jeweiligen Arbeitsrichtung des bzw. der Schwingungstilger 7. Die Bolzen 10 übertragen die durch das Feder-Masse-System 8 erzeugten Kräfte auf eine Grundplatte 9, die fest mit dem Maschinengehäuse 2 der elektrischen Maschine 1 verbunden ist. Mittels Gewindemuttern 13 wird sowohl die axiale Position der Masse 12 auf den Bolzen 6 zur Führung, sowie die Vorspannung der Federn oder des Federsystems 11 festgelegt. Die Masse 12 wird mittels einer pendelnden Aufhängung, z. B. mittels Ketten 15 in vertikaler Richtung an einen Aufhängevorrichtung 14 gehalten, wobei die Aufhängung eine Bewegung der Masse 12 in Arbeitsrichtung ermöglicht. Die Abstimmung des Feder-Masse-Systems 8 muss so ausgeführt sein, dass sich im Arbeitspunkt eine Phasenverschiebung zwischen 60° und 120° zwischen Masse 12 und Grundplatte 9 einstellt. Dies ist üblicherweise der Fall, wenn die Eigenfrequenz des Schwingungstilgers 7 als Einmassensystem betrachtet mit der anliegenden Erregerfrequenz zusammen fällt.

Von Vorteil ist es, wenn die Schwingungstilgungseinrichtung 6 bei großen elektrischen Maschinen zum Schutz von einem zusätzlichen Schwingungstilgergehäuse (nicht gezeichnet) umschlossen ausgebildet ist. Die Schwingungstiger 7 können aber auch ohne Gehäuse ausgeführt sein.

Insbesondere im Fall horizontal nachgiebiger Fundamente, wie es durchaus bei großen elektrischen Maschinen vorkommen kann, führt die Anwendung der erfindungsgemäßen Schwingungstilgungseinrichtungen 6 bei Nenndrehzahl zu einer künstlich erhöhten Steifigkeit des gesamten Maschinengehäuses 2 der elektrischen Maschine 1. Dadurch können Eigenfrequenzen wie das Auftreten der Wellenbiegeresonanz bei Abstimmungsfrequenz zuverlässig ausgeschlossen werden. Die Schwingungstilger 7 sorgen in einem eingeschränkten Frequenzbereich um die Abstimmfrequenz für die Resonanzfreiheit. Aber auch ohne Auftreten von Resonanzen sorgen die Schwingunstilger für eine deutliche Minimierung von Maschinenschwingungen im Arbeitspunkt der großen elektrischen Maschine. Der modulare Aufbau der erfindungsgemäßen translatorischen Schwingungstilger 7 erlaubt eine nachträgliche Installation bei sich bereits länger im Einsatz befindlichen elektrischen Maschinen ohne vorherige Berücksichtigung der Schwingungstilger. Sollte die Installation eines Einzelnen, oder weniger translatorischer Schwingungstilger 7 im Lastbetrieb nicht ausreichen, kann die Leistungsfähigkeit bei Bedarf durch zusätzliche Schwingungstilger 7 gesteigert werden. Der Einsatz der neuartigen translatorischen Schwingungstilger 7 bei großen elektrischen Maschinen stellt eine zuverlässige passive Maßnahme und kostengünstige Möglichkeit mit geringem Materialaufwand dar, um Schwingungen an solcherart Maschinen dauerhaft erheblich reduzieren zu können. Die hohe Flexibilität bezüglich der Gestaltung der Feder-Masse-Systeme 8 und der anderen Einzelteile erlauben die Anpassung an verschiedenste Erregerfrequenzen. Kleine Abweichungen von Erregerfrequenzen können zum Beispiel durch Erhöhung der Tilgermasse bei gleichzeitiger Erhöhung der Federsteifigkeiten problemlos ausgeglichen werden. Die Schwingungstilgungseinrichtungen 6 führen zu einer Verlängerung der Lebensdauer der großen elektrischen Maschine. In speziellen Anwendungen eigenen sich die translatorischen Schwingungstilger 7 auch zur Minimierung tonaler abgestrahlter störender Geräusche.

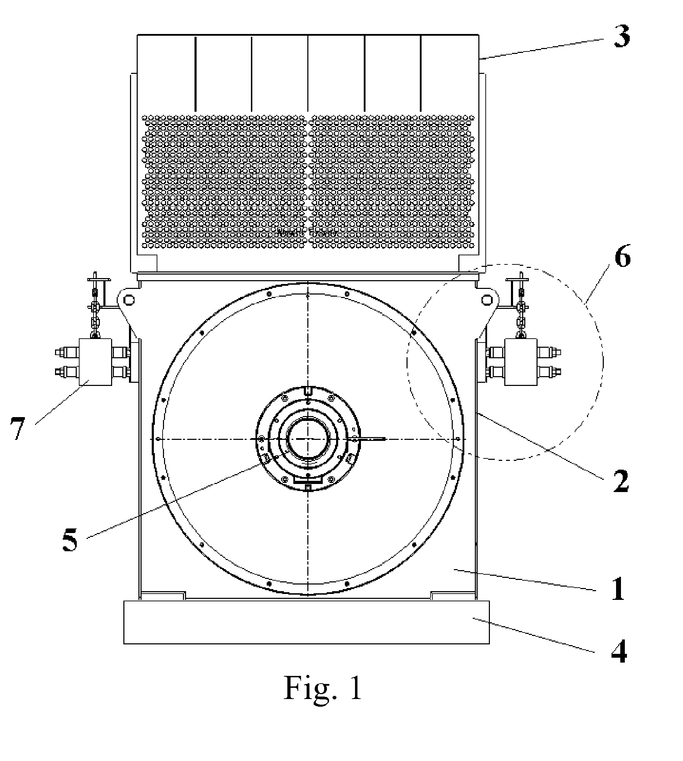

Die Erfindung soll nachstehend in einem Ausführungsbeispiel an Hand der Figuren 1 bis 4 näher erläutert werden. Das nachstehend beschriebene Ausführungsbeispiel bezieht sich auf eine Gehäuselagermaschine mit auf dem Maschinengehäuse 1 angeordneten Aufsatzkühler 3. Die Lösung ist prinzipiell auch für sogenannte Stehlagermaschinen anwendbar.
- Fig. 1: zeigt eine Axialansicht einergroßen elektrischen Maschine 1 mit Gehäuselager mit zwei seitlich am Maschinengehäuse 2angeordneten Schwingungstilgungseinrichtungen 6
- Fig. 2: zeigt als vergrößertes Detail die Axialansicht auf eine mögliche Ausführung einer Schwingungstilgungseinrichtung 6
- Fig. 3: zeigt eine Seitenansicht einer Gehäuselagermaschine mit einer Seitenansicht auf eine Schwingungstilgungseinrichtung 6
- Fig. 4: zeigt als vergrößertes Detail eine Schnittdarstellung auf eine mögliche Ausführung einer Schwingungstilgungseinrichtung 6

Aus Figur 1 ist ersichtlich, wie links und rechts im oberen Bereich am statischen Bauteil, hier direkt am Maschinengehäuse 2 einer großen elektrischen Maschine 1 links uns rechts je eine Schwingungstilgungseinrichtung 6 zur Schwingungsreduzierung angeordnet ist. Vorzugsweise sind die Schwingungstilgereinrichtungen 6 symmetrisch oder diagonal gegenüber liegend am Maschinengehäuse 2 unterhalb der Ebene auf der Kühler 3 als Aufsatzkühler aufgestellt ist, angeordnet. Die elektrische Maschine 1 steht als Gehäuselagermaschine, d. h. die Welle 5 ist im Maschinengehäuse 2 gelagert auf einem Fundament 4 und ist mit diesem fest verbunden. Die translatorischen Schwingungstilger 7 sind gegenüberliegend am Maschinengehäuse 2 befestigt.

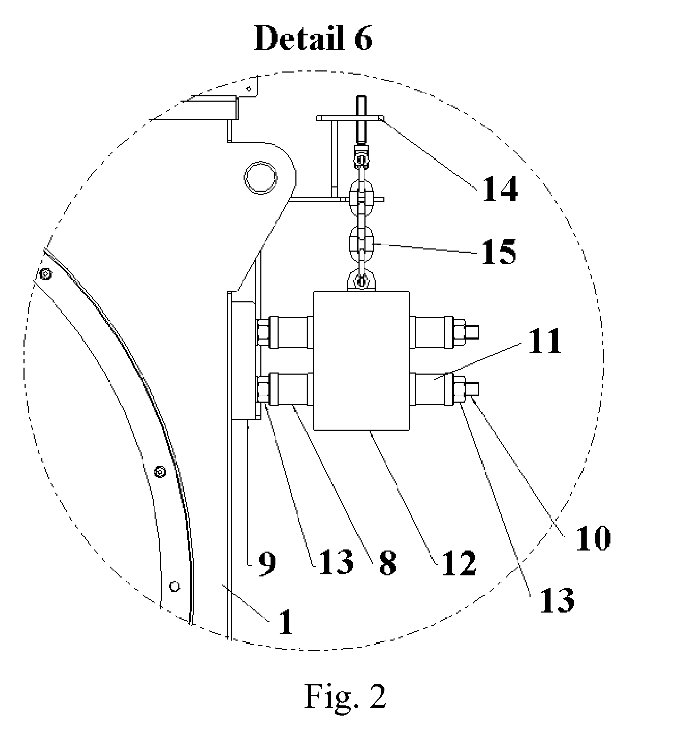

Figur 2 zeigt als Detail eine Schwingungstilgereinrichtung 6 mit einem neuartigen translatorischen Schwingungstilger7. Der Schwingungstilger 7 ist mit einer Aufhängevorrichtung 14 am Maschinengehäuse 2 direkt angeordnet, wobei der eigentlich aktive translatorische Schwingungstilger 7 mittels einer oder mehreren Ketten 15 (hier sind auch andere Aufhängungen z. B. mittels Seilen oder Tragriemen oder federnden Tragelementen möglich) an einem Ausleger der Aufhängevorrichtung 14 frei beweglich oder pendelnd befestigt ist. Die Schwingungen des Maschinengehäuses 2 werden direkt mittels der Grundplatte 9 vom Maschinengehäuse 2 in den translatorischen Schwingungstilger 7 eingekoppelt. Die Grundplatte 9 liegt dabei direkt flächig am Maschinengehäuse 2 an und ist mit dem Maschinengehäuse 2 fest verbunden. Bevorzugt ist die Grundplatte 9 verschraubt oder verschweißt angeordnet. Es sind aber auch generell andere Befestigungen möglich.

In der Grundplatte 9 sind zwei, vier, sechs oder mehrere Bolzen 12 eingelassen und befestigt, welche das Feder-Masse-System 8 lagern und führen. Die Masse 12 ist elastisch zwischen zwei Federpaketen, welche aus zwei sich gegenüber liegenden vorgespannten Federn 11 bestehen gelagert. Mittels der Muttern (Gewindemuttern auf Gewindebolzen) 13 kann die genaue Position sowohl der Masse 12 als auch die Federvorspannung mit Hilfe der Bolzen 10 hochgenau eingestellt und bei nichtlinearen Federkennlinien an die Erregerfrequenz angepasst werden. Als Federn kommen bevorzugt Schraubenfedern, Tellerfedern oder gegebenenfalls auch entsprechend dimensionierte Gummifederelemente zum Einsatz. Durch die aufeinander abgestimmte Dimensionierung der Auswahl, Abmessung und Eigenschaften der vorzuspannenden Federn 11 und der entsprechend gewählten Masse 12 kann die Abstimmfrequenz genau festgelegt werden. Die Abstimmung ist dabei so zu wählen, dass bei Erregerfrequenz ein Phasenverhältnis von bevorzugt 85° bis 95° zwischen Grundplatte 9 und Masse 12 eingestellt ist. An der schwingenden Masse 12 ist zu deren schwingenden Aufhängung eine Kette 15 befestigt, welche über eine beliebig ausführbare Aufhängevorrichtung 14 am Maschinengehäuse 2 befestigt ist.

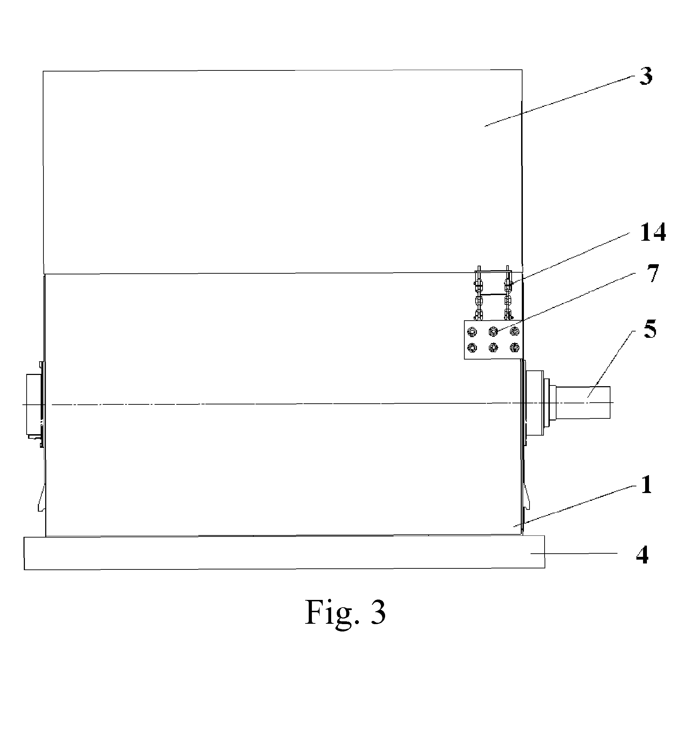

Figur 3 zeigt eine Seitenansicht einer elektrischen Maschine 1, d. h. eine Gehäuselagermaschine und die Anordnung einer Schwingungstilgungseinrichtung 6 am Maschinengehäuse 2 oben bündig abschließend mit dem Maschinengehäuse 2 in Richtung des Lagers 5 der elektrischen Maschine 1. Der translatorische Schwingungstilger 7 ist hier in diesem Beispiel mit sechs Bolzen 12 auf der Grundplatte 9 ausgeführt und an dieser geführt und befestigt. Die Anzahl der Bolzen 12 ist abhängig von der erforderlichen Dimensionierung der Masse 12 und der erforderlichen Abstimmung des Feder-Masse-Systems 8. Gleichzeitig kann die Anzahl der Bolzen 10 von der gewählten Art der Federn bzw. von den Federkonstanten bestimmt werden.

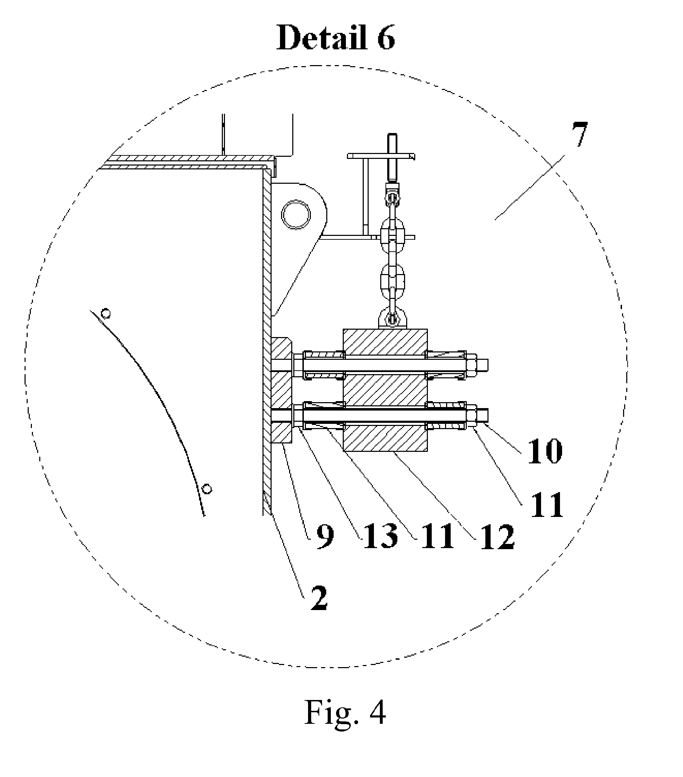

Als vergrößertes Detail ist in Figur 4 zum besseren Verständnis noch eine Schnittdarstellung mit einer möglichen Ausführung der neuartigen Schwingungstilgungseinrichtung 6 mit dem translatorischen Schwingungstilger 7 aufgeführt. Hier ist besonders das Feder-Masse-System 8 der Übersichtlichkeit halber noch einmal für eine etwas kleinere dimensionierte große elektrische Maschine abgebildet. Das Feder-Masse-System 8 ist auf zwei mal drei Bolzen 10 gelagert und geführt und mittels der Grundplatte 9 am Maschinengehäuse 2 zur Schwingungseinkoppelung befestigt. Es setzt sich zum Beispiel pro Bolzen 10 aus einem federnden Gummielement 11 und einer gegenwirkenden vorspannbaren Schraubenfeder 11 zusammen, welche die Masse 12 schwingend zwischen den Feststellbaren Muttern 13 lagern, führen und die eingekoppelten Schwingungen dabei dämpfen.

### Bezugszeichenliste

- 1: elektrische Maschine
- 2: Maschinengehäuse
- 3: Kühler
- 4: Fundament
- 5: Welle
- 6: Schwingungstilgungseinrichtung
- 7: Schwingungstilger
- 8: Feder-Masse-System
- 9: Grundplatte
- 10: Bolzen
- 11: Feder oder Federsystem
- 12: Masse
- 13: Muttern
- 14: Aufhängevorrichtung
- 15: Kette

## Patentansprüche

1. Schwingungstilgungseinrichtung (6) für eine große elektrische Maschine (1) für unterschiedliche Einsatzorte mittels schwingungsdämpfenden Elementen,
**dadurch gekennzeichnet,**
**dass** eine oder mehrere translatorische Schwingungstilgungseinrichtung/en (6) an statischen Bauteilen der elektrischen Maschine (1), wie Maschinengehäuse (2), Kühler (3), am Gehäuserahmen oder mehreren Gehäuseelementen oder am Fundament (4) angeordnet sind, die Schwingungstilgereinrichtung/en (6) beweglich über eine Aufhängeeinrichtung (14) befestigt sind,
die Schwingungstilgereinrichtung (6) als ein Feder-Masse-System (8) ausgebildet sind, wobei die Masse (12) elastisch zwischen mindestens zwei Federn oder Federsystemen (11) angeordnet ist,
das Feder-Masse-System (8) über Bolzen (10) über eine Grundplatte (9) am statischen Bauteil der elektrischen Maschine (1) befestigt ist.

2. Schwingungstilgungseinrichtung für eine große elektrische Maschine nach Anspruch 1, **dadurch gekennzeichnet,**
**dass** das Feder-Masse-System (8) so ausgebildet ist, das bei Erregerfrequenz ein Phasenverhältnis von 60° bis 120° zwischen Grundplatte (9) und Masse (12) ausgebildet ist.

3. Schwingungstilgungseinrichtung für eine große elektrische Maschine nach Anspruch 1, **dadurch gekennzeichnet,**
**dass** die Schwingungstilgungseinrichtung (6) von einem Schwingungstilgergehäuse umschlossen ausgebildet ist.
